# DEMANDE DE BREVET EUROPEEN

(11) **EP 1 389 543 A1**
(43) Date de publication de la demande: **18.02.2004**
(21) Numéro de dépôt: 03292028.2
(22) Date de dépôt: 13.08.2003
(51) Int. Cl.: B60H 1/34, B60H 1/00

(54) **Ensemble pour véhicule automobile comprenant au moins une buse d'aération et véhicule automobile équipé d'un tel ensemble**

(30) Priorité: 14.08.2002 FR 0210327
(71) Demandeur: Renault s.a.s., 92100 Boulogne Billancourt (FR)
(72) Inventeur: Haub, Markus, 08010 Barcelone (ES); Urset, Charles, 08034 Barcelone (ES)

(57) **Abrégé**

L'invention concerne un ensemble (16) pour véhicule automobile équipé d'un système de chauffage/climatisation (8), l'ensemble (16) étant destiné à être installé sur une planche de bord du véhicule et comprenant un boîtier (20) dans lequel est prévu au moins une buse d'aération susceptible de communiquer avec le système de chauffage/climatisation (8) et apte à autoriser un écoulement d'air dans l'habitacle du véhicule, l'ensemble (16) comprenant en outre des moyens de commande (42) de l'orientation de chaque buse d'aération montés sur le boîtier (20). Selon l'invention, l'ensemble (16) comporte également des moyens de commande (44, 50, 56, 62, 64) du système de chauffage/climatisation (8) montés sur le boîtier (20) de l'ensemble (16).

## Description

### DOMAINE TECHNIQUE

La présente invention se rapporte à un ensemble pour véhicule automobile équipé d' un système de chauffage/climatisation, l' ensemble étant destiné à être installé sur la planche de bord du véhicule et comprenant au moins une buse d'aération apte à autoriser un écoulement d'air à l'intérieur du véhicule.

L'invention a également trait à un véhicule automobile comprenant un système de chauffage/ climatisation, et étant équipé d' un tel ensemble.

### ETAT DE LA TECHNIQUE ANTERIEURE

Dans ce domaine technique, plusieurs réalisations ont déjà été proposées.

On connaît en effet de l'art antérieur des aérateurs classiques comportant généralement une buse d'aération logée dans un boîtier, dans lequel elle est apte à pivoter selon un ou plusieurs axes. L'orientation de la buse d'aération dans le boîtier peut être effectuée à l'aide de moyens de commande actionnables par le conducteur ou par un passager du véhicule, ces moyens de commande étant également montés sur le boîtier portant la ou les buses d'aération. En commandant l'orientation de la buse d' aération, il devient alors possible de donner une direction souhaitée à l'écoulement d'air pénétrant dans l' habitacle du véhicule, ou encore d' engendrer la complète fermeture de cet aérateur.

Les aérateurs classiques qui viennent d'être décrits sont habituellement montés par encastrement sur la planche de bord du véhicule, dans des logements de formes sensiblement complémentaires de celles des boîtiers associés. Lorsqu'ils sont installés dans leurs logements respectifs, les aérateurs communiquent avec au moins un conduit de distribution d'air du système de chauffage/climatisation, de sorte qu'ils sont chacun en mesure d'autoriser un écoulement d'air à température donnée, à l'intérieur de l' habitacle du véhicule.

Cependant, l'opération d' assemblage de tels aérateurs sur la planche de bord du véhicule vient s'ajouter à une multitude d'autres opérations du même type, tant le nombre d'ensembles équipant la planche de bord est important.

Cette contrainte se traduit inévitablement par des coûts de fabrication et de mains d' oeuvre élevés, ces coûts étant d'autant plus conséquents qu' il existe d'ensembles différents à réaliser et à monter sur la planche de bord du véhicule.

### EXPOSÉ DE L'INVENTION

L'invention a donc pour but de proposer un ensemble pour véhicule automobile équipé d'un système de chauffage/climatisation, l'ensemble étant destiné à être installé sur la planche de bord du véhicule et comprenant au moins une buse d' aération apte à autoriser un écoulement d'air à l'intérieur du véhicule, l' ensemble remédiant en outre et au moins partiellement aux inconvénients mentionnés ci-dessus relatifs aux réalisations de l'art antérieur.

Plus précisément, le but de la présente invention est de proposer un ensemble pour véhicule destiné à autoriser un écoulement d'air dans l' habitacle de ce véhicule, cet ensemble minimisant fortement les coûts de fabrication et de main d' oeuvre relatifs aux divers ensembles équipant la planche de bord du véhicule.

Pour ce faire, l'invention a tout d'abord pour objet un ensemble pour véhicule automobile équipé d' un système de chauffage/climatisation, l'ensemble étant destiné à être installé sur une planche de bord du véhicule et comprenant un boîtier dans lequel est prévu au moins une buse d'aération susceptible de communiquer avec le système de chauffage/climatisation et apte à autoriser un écoulement d'air dans l' habitacle du véhicule, l' ensemble comprenant en outre des moyens de commande de l' orientation de chaque buse d'aération montés sur le boîtier. Selon l'invention, l' ensemble comporte également des moyens de commande du système de chauffage/climatisation montés sur le boîtier de l'ensemble.

Avantageusement, l' ensemble selon l'invention permet de disposer d'un module unique destiné à être monté sur la planche de bord du véhicule, et remplissant une pluralité de fonctions différentes. En effet, outre le fait de présenter des moyens classiques constituant un aérateur, l' ensemble selon l' invention renferme également des moyens de commande du système de chauffage/climatisation. Ainsi, le boîtier unique de l' ensemble proposé est conçu afin de pouvoir intégrer d'une part une ou des buses d'aération de l'habitacle, et d'autre part les moyens de commandes du système de chauffage/climatisation. La solution retenue est avantageuse par rapport aux réalisations de l'art antérieur dans lesquelles les aérateurs et les moyens de commande du système de chauffage/climatisation étaient des éléments totalement indépendants, et nécessitaient par conséquent chacun leur propre boîtier de support en vue d'être montés successivement sur la planche de bord du véhicule.

De plus, outre la diminution du nombre de moules et de pièces à fabriquer pour obtenir et assembler l'intégralité des ensembles requis sur la planche de bord, la présence d'un boîtier de support commun à différents ensembles engendre également la réduction de la quantité d'opérations d'assemblage de ces ensembles sur la planche de bord. En effet, en disposant d'un ensemble unique intégrant plusieurs fonctions, une seule opération d'assemblage de cet ensemble est suffisante pour munir la planche de bord des moyens destinés à remplir ces diverses fonctions.

Ainsi, les coûts de fabrication et de main d' oeuvre relatifs aux ensembles équipant la planche de bord du véhicule sont largement diminués.

Préférentiellement, les moyens de commande du système de chauffage/climatisation montés sur le boîtier de l'ensemble comprennent :
- une commande de la température de l'air sortant du système de chauffage/climatisation;
- une commande de la vitesse de l'air sortant du système de chauffage/climatisation;
- une commande de la distribution de l'air sortant du système de chauffage/climatisation;
- une commande de recyclage de l'air sortant du système de chauffage/climatisation;
- une commande marche/arrêt du système de chauffage/climatisation.

De plus, on peut également prévoir qu' au moins une commande appartenant aux moyens de commande du système de chauffage/climatisation est une commande électrique précâblée. De cette façon, il est possible d'obtenir un ensemble totalement précâblé prêt à être monté directement sur la planche de bord du véhicule, sans nécessiter d'opérations supplémentaires.

De manière préférée, chaque buse d'aération est susceptible de coopérer avec au moins une entrée d'air et au moins une sortie d'air pratiquées dans le boîtier, chaque entrée d'air du boîtier étant susceptible de coopérer avec au moins un conduit de distribution d'air du système de chauffage/ climatisation, et chaque sortie d'air du boîtier étant susceptible de déboucher dans l' habitable du véhicule.

En outre, chaque buse d'aération comporte des moyens aptes à obturer au moins partiellement chaque sortie d'air du boîtier lui étant associée, cette caractéristique spécifique permettant à un conducteur ou à un passager du véhicule actionnant les moyens de commande de l'orientation des buses d'aération, d'orienter et/ou de couper l' écoulement d' air à travers les sorties d' air du boîtier de l' ensemble.

De manière préférentielle, l' ensemble comprend de plus une commande marche/arrêt des feux de détresse du véhicule, la commande étant également montée sur le boîtier. Par ailleurs, il est à noter que toute autre commande du type interrupteur habituellement présente sur la planche de bord du véhicule peut être montée sur le boîtier de l' ensemble, toujours dans un soucis de réduire les coûts de fabrication et de main d' oeuvre.

Enfin, l' ensemble peut comprendre un élément de support apte à être monté sur la planche de bord du véhicule, et dans lequel le boîtier est susceptible d'être assemblé par clipsage. Ainsi, le support proposé permet d'effectuer un assemblage optimisant au maximum le temps de montage de l'ensemble sur la planche de bord du véhicule.

L'invention a également pour objet un véhicule automobile équipé d' un système de chauffage/climatisation. Selon l'invention, le véhicule est équipé d'un ensemble tel que celui objet de l'invention et décrit ci-dessus, cet ensemble étant assemblé sur la planche de bord du véhicule à proximité du bloc de chauffage du système de chauffage/climatisation. Cette localisation spécifique de l' ensemble permet alors avantageusement de disposer d' un système de chauffage/climatisation dont les conduits de distribution d'air, établissant la jonction entre le bloc de chauffage et l' ensemble équipant la planche de bord du véhicule, sont relativement simples et de longueurs faibles.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en coupe d'un ensemble selon un mode de réalisation préféré de la présente invention, assemblé sur la planche de bord d'un véhicule automobile ;
- la figure 2 représente une vue en perspective partiellement éclatée, à plus grande échelle, du système de chauffage/climatisation et de l'ensemble représentés sur la figure 1 ;
- la figure 3 représente une vue en perspective partiellement éclatée, à plus grande échelle, de l'ensemble représenté sur la figure 2 ;
- les figures 4a à 4c représentent des vues schématiques en coupe d' une partie de l' ensemble représenté sur la figure 3, dans lesquelles une buse d'aération occupe diverses orientations par rapport au boîtier de l'ensemble.

### EXPOSÉ DÉTAILLÉ DE MODES DE RÉALISATION PRÉFÉRÉS

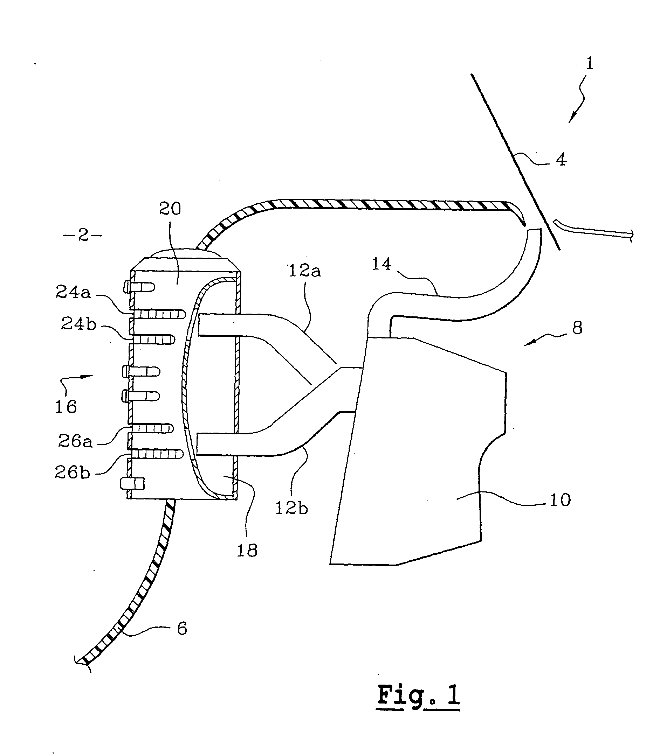

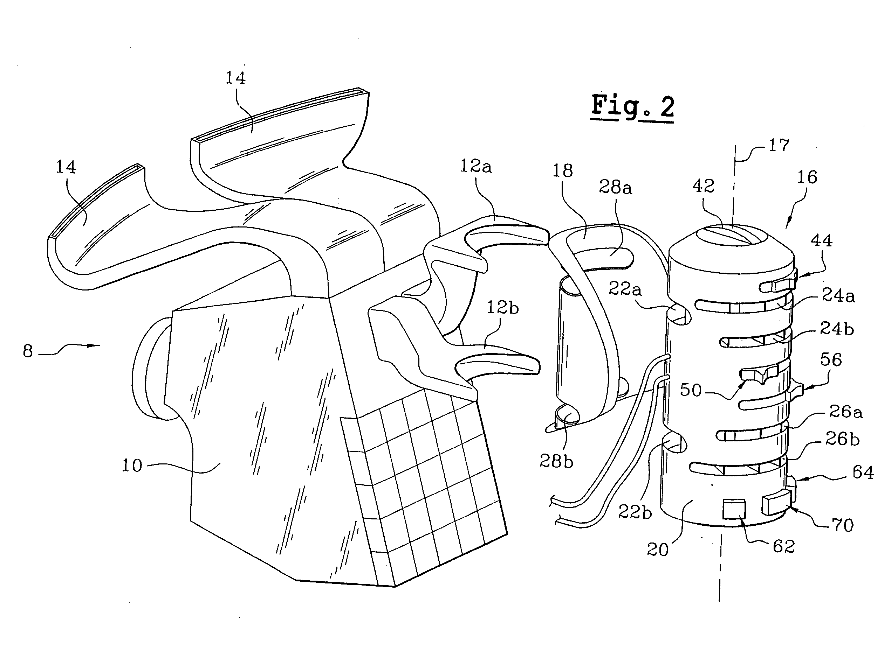

En référence conjointement aux figures 1 et 2, il est représenté partiellement et schématiquement un véhicule automobile 1, le véhicule comprenant un habitacle 2 délimité en partie par un pare-brise 4 et une planche de bord 6. Le véhicule 1 est équipé d'un système de chauffage/climatisation 8, ce dernier étant représenté schématiquement et comprenant un bloc de chauffage/climatisation 10, ainsi que des conduits de distribution d'air 12a,12b,14 s'étendant entre le bloc de chauffage/climatisation 10 et l' habitacle 2 du véhicule 1.

Un ensemble 16, notamment destiné à autoriser un écoulement d'air dans l'habitacle 2 du véhicule 1, est monté sur la planche de bord 6 de ce véhicule, de façon à être facilement accessible au conducteur ou à un passager situé à bord de ce véhicule. Il est précisé que l'ensemble 16 est monté à proximité du bloc de chauffage/climatisation 10 du système de chauffage/climatisation 8, de manière à simplifier considérablement les conduits de distribution d'air 12a,12b destinés à alimenter l' ensemble 16. En outre, l' ensemble 16 est de préférence de forme cylindrique d'axe 17, et s'étend sensiblement dans la direction de la hauteur du véhicule 1, perpendiculairement au plancher (non représenté) de ce dernier.

L'ensemble 16 comporte un support 18 ainsi qu' un boîtier 20 destiné à être assemblé par clipsage dans le support 18, ce dernier étant lui-même capable d'être assemblé par clipsage sur la planche de bord 6 du véhicule 1. Bien entendu, tout autre mode d' assemblage de ces différents éléments sur la planche de bord 6 est également envisageable.

Plus spécifiquement et en référence à la figure 2, le boîtier 20 de l' ensemble 16 est un cylindre creux muni d'au moins une entrée d' air 22a, 22b, ainsi que d' au moins une sortie d'air 24a, 24b, 26a, 26b.

Dans le mode de réalisation préféré décrit, le boîtier 20 comporte deux entrées d'air 22a,22b respectivement aptes à coopérer avec deux conduits de distribution d'air 12a,12b du système de chauffage/climatisation 8, lorsque l'ensemble 16 est monté sur la planche de bord 6 du véhicule 1. Les entrées d'air 22a, 22b du boîtier 20 s'étendent sensiblement perpendiculairement à l'axe 17 sur un demi-cylindre, et sont respectivement prévues sur une partie supérieure et une partie inférieure du boîtier 20. Comme on peut le voir sur la figure 2, les entrées d' air 22a, 22b prennent la forme de trous oblongs courbés, débouchant à l'intérieur et à l'extérieur du boîtier creux 20 de l' ensemble 16. Notons à cet égard que le support 18 est également muni d'orifices 28a,28b afin de permettre le passage de l'air entre les conduits de distribution d'air 12a,12b et les entrées d'air 22a,22b prévues sur le boîtier 20.

De plus, le boîtier 20 comprend également quatre sorties d'air 24a, 24 b, 26a, 26b s'étendant également sensiblement perpendiculairement à l'axe 17 du boîtier 20, et débouchant dans l'habitacle 2 lorsque l'ensemble 16 est monté sur la planche de bord 6 du véhicule 1. Les sorties d'air 24a,24b,26a,26b prennent également la forme de trous oblongs courbés, débouchant à l' intérieur et à l' extérieur du boîtier creux 20 de l' ensemble 16.

Les sorties d'air 24a,24b sont situées parallèlement à proximité l'une de l' autre, et placées en regard de l'entrée d'air 22a avec laquelle elles sont destinées à coopérer pour autoriser un écoulement d'air dans l'habitacle 2 du véhicule 1. De la même manière, les sorties d'air 26a,26b sont situées parallèlement à proximité l' une de l' autre, et placées en regard de l'entrée d'air 22b avec laquelle elles sont destinées à coopérer pour autoriser un écoulement d'air dans l'habitacle 2 du véhicule 1.

Naturellement, le nombre et la disposition des entrées et des sorties d'air 22a,22b,24a, 24b,26a,26b du boîtier 20 peuvent être modifiés, notamment en fonction de la géométrie des conduits de distribution d'air 12a,12b du système de chauffage/climatisation 8.

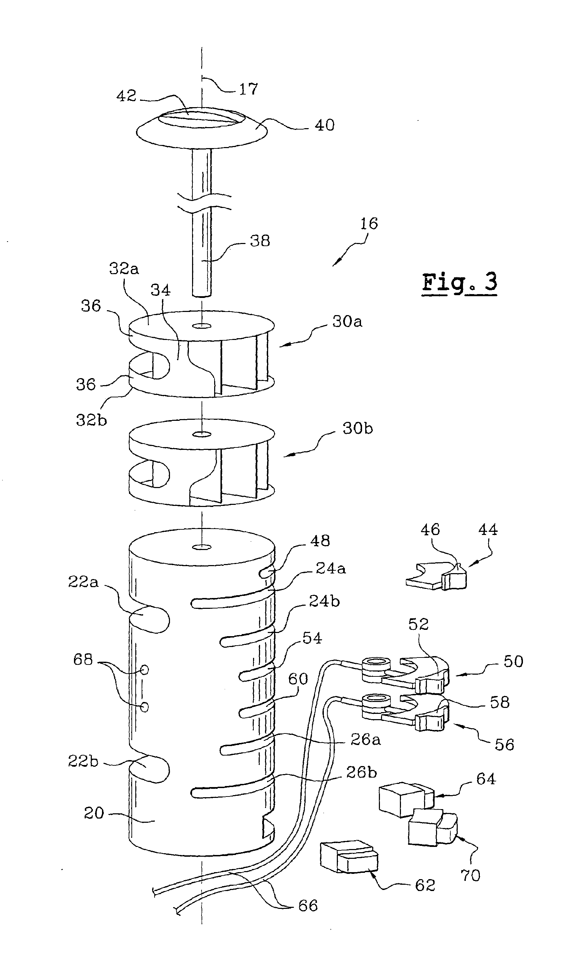

La figure 3 illustre une vue partiellement éclatée en perspective de l'ensemble 16 selon le mode de réalisation préféré décrit.

Outre les éléments déjà décrits précédemment, l'ensemble 16 comporte également deux buses d'aération 30a,30b montées sur le boîtier 20 de cet ensemble. Lorsqu'elles sont mises en place dans le boîtier creux 20, les buses d'aération 30a,30b coopèrent respectivement d' une part avec l' entrée d' air 22a et les sorties d'air 24a,24b du boîtier 20, et d'autre part avec l'entrée d'air 22b et les sorties d'air 26a,26b de ce même boîtier 20. Ainsi, le groupe d' éléments constitué d' une ou plusieurs buses d'aération 30a,30b et d'une ou plusieurs sorties d' air associées 24a, 24b, 26a, 26b, est assimilable à un aérateur classique d'habitacle de véhicule automobile.

Chaque buse d'aération 30a, 30b est donc susceptible d'autoriser un écoulement d'air dans l' habitacle 2 du véhicule 1, par l' intermédiaire de leur( s) entrée( s) et de leur(s) sortie(s) d' air associées. Comme on peut le voir sur la figure 3, les buses d'aération 30a, 30b ont une forme cylindrique complémentaire de la forme intérieure du boîtier creux 20 de l' ensemble 16, afin d'être facilement introduites dans ce boîtier et de pouvoir être mises en rotation selon l'axe 17 à l'intérieur de celui-ci.

La buse d'aération 30a, identique à la buse d'aération 30b dans le mode de réalisation préféré décrit, comprend deux disques 32a, 32b disposés sensiblement parallèlement et reliés l'un à l'autre au moyen d'attaches circonférentielles 34, chacun de ces disques 32a,32b étant destiné à coopérer avec une sortie d'air 24a,24b associée du boîtier 20.

Par ailleurs, chaque disque 32a,32b comporte des moyens aptes à obturer au moins partiellement la sortie d'air du boîtier 24a,24b lui étant associée, de manière à orienter et/ou couper l' écoulement d'air dans l' habitacle 2 du véhicule 1.

Préférentiellement, pour chaque disque 32a,32b de la buse d'aération 30a, les moyens aptes à obturer au moins partiellement les sorties d' air 24a,24b comprennent un rebord circonférentiel 36 s' étendant sur sensiblement un demi-périmètre du disque concerné, et faisant saillie de ce disque en direction de l'autre disque de la buse d'aération 30a. Notons que pour obtenir l' effet escompté, à savoir l' obturation partielle ou totale d'une sortie d'air 24a,24b au moyen d'un rebord circonférentiel 36, ce dernier est conçu de sorte qu'il fasse saillie sur une longueur supérieure ou égale à la hauteur de la sortie d'air 24a,24b destinée à être obturée.

De plus, l'ensemble 16 comporte des moyens de commande de l'orientation de chaque buse d'aération 30a,30b, ces moyens étant montés sur le boîtier 20 de l' ensemble 16. Notons que préférentiellement, les moyens de commande de l'orientation de chaque buse 30a,30b sont communs pour les deux buses, mais qu' ils pourraient bien entendu être distincts.

Les moyens de commande de l' orientation comprennent un axe 38 solidaire des buses d'aération 30a,30b, cet axe 38 se prolongeant au-delà d'une partie supérieure du boîtier 20 par une commande 40 dotée d'une nervure 42, la commande 40 étant montée extérieurement sur le boîtier 20 de manière à pouvoir pivoter par rapport à ce dernier. Lorsqu' elle est tournée par une personne située à bord du véhicule, la nervure 42 permet d'engendrer une rotation selon l'axe 17 des buses d'aération 30a,30b par rapport au boîtier 20 de l'ensemble 16, et d'orienter et/ou de couper l' écoulement d'air dans l' habitacle 2 du véhicule 1. Notons que le fonctionnement de l' aération par l'intermédiaire des buses d'aération 30a, 30b sera présenté ci-après.

Par ailleurs, l'ensemble 16 est également muni de moyens de commande du système de chauffage/climatisation 8 du véhicule 1, ces moyens étant montés sur le boîtier 20.

Toujours en référence à la figure 3, l'ensemble 16 comporte une commande 44 de la vitesse de l' air sortant du système de chauffage/climatisation 8, cette commande s'inscrivant dans les moyens de commande du système de chauffage/climatisation 8 du véhicule 1. La commande 44 est du type électrique ou mécanique, et reliée à un ventilateur (non représenté) du système de chauffage/climatisation 8. De plus, cette commande 44 peut prendre la forme d'un organe 46 apte à coulisser dans un orifice 48 prévu sur le boîtier 20, l' orifice 48 du type trou oblong courbé s'étendant sensiblement parallèlement aux sorties d'air 24a, 24b, 26a, 26b de ce boîtier 20. De cette façon, la position de l'organe 46 dans l'orifice 48, par exemple pilotable par la main du conducteur du véhicule, permet de traduire de façon mécanique ou électrique la vitesse de l' air souhaité à la sortie du système de chauffage/climatisation 8.

En outre, les moyens de commande du système de chauffage/climatisation 8 du véhicule 1 peuvent comprendre une commande 50 de la distribution de l'air sortant du système de chauffage/climatisation 8. Cette commande 50, électrique ou mécanique, permet de piloter divers volets (non représentés) du système de chauffage/climatisation 8, afin d'acheminer l' air vers les conduits de distribution d'air souhaités. A titre d'exemples, la commande 50 peut être actionnée en vue d' alimenter uniquement l' ensemble 16 comprenant les buses d' aération 30a, 30b par l' intermédiaire des conduits de distribution d'air 12a,12b, ou encore en vue d'alimenter uniquement les conduits de distribution d'air 14 pour effectuer un désembuage et/ou un dégivrage du pare-brise 4 du véhicule 1. Bien entendu, la distribution d'air peut être commandée de sorte que les conduits 12a,12b,14 ainsi que des conduits (non représentés) de distribution d'air à proximité du plancher soient simultanément alimentés. Au même titre que pour la commande 44 de la vitesse de l'air, la commande 50 de la distribution de l'air peut prendre la forme d' un organe 52 apte à coulisser dans un orifice 54 prévu sur le boîtier 20, l'orifice 54 du type trou oblong courbé s'étendant sensiblement parallèlement aux sorties d'air 24a, 24 b, 26a, 26b de ce boîtier 20. De cette façon, la position de l'organe 52 dans l'orifice 54, par exemple pilotable par la main du conducteur du véhicule, permet de traduire de façon mécanique ou électrique la distribution de l'air que l'on souhaite obtenir dans les conduits 12a, 12b, 14 du système de chauffage/climatisation 8, et par conséquent dans l'habitacle 2 du véhicule 1.

Par ailleurs, les moyens de commande du système de chauffage/climatisation 8 du véhicule 1 comprennent une commande 56 de la température de l' air sortant du système de chauffage/climatisation 8.

Cette commande 56, électrique ou mécanique, permet de piloter divers volets (non représentés) du système de chauffage/climatisation 8, afin d'obtenir de l'air à la température souhaitée dans l' habitacle 2 du véhicule 1. Elle peut également prendre la forme d'un organe 58 apte à coulisser dans un orifice 60 prévu sur le boîtier 20, l'orifice 60 du type trou oblong courbé s'étendant sensiblement parallèlement aux sorties d'air 24a,24b,26a,26b de ce boîtier 20. De cette façon, la position de l'organe 58 dans l'orifice 60, par exemple pilotable par la main du conducteur du véhicule, permet de traduire de façon mécanique ou électrique la température de l'air que l'on souhaite obtenir dans les conduits de distribution d'air 12a,12b,14 du système de chauffage/climatisation 8, et donc dans l' habitacle 2 du véhicule 1.

Enfin, il est à noter que les moyens de commande du système de chauffage/climatisation 8 du véhicule 1 peuvent également comprendre une commande 62 de recyclage de l'air, cette commande permettant au choix d' autoriser ou d' interdire au système de chauffage/climatisation 8 de réutiliser l'air déjà injecté dans l'habitacle 2 du véhicule 1. Une autre commande 64 de marche/arrêt du système de chauffage/climatisation 8 est également envisageable. Il est précisé que les commandes 62 et 64 peuvent chacune prendre la forme d'un interrupteur classique, actionnable par exemple à l'aide d'une simple pression réalisée par la main du conducteur du véhicule.

Comme cela a été indiqué ci-dessus, les diverses commandes constituant les moyens de commande du système de chauffage/climatisation 8 peuvent être des commandes du type électrique. Dans un tel cas, les commandes concernées peuvent être précâblées à l'aide de câbles électriques 66, traversant le boîtier 20 par des trous de passage 68 prévus à cet effet.

Préférentiellement, l' ensemble 16 est également destiné à intégrer d'autres commandes que celles liées aux buses d'aération 30a,30b et au système de chauffage/climatisation 8. Par exemple, l' ensemble 16 comporte une commande 70 des feux de détresse (non représentés) du véhicule 1, cette commande 70 du type marche/arrêt prenant la forme d' un interrupteur classique monté sur le boîtier 20 de l'ensemble 16, et actionnable par simple pression.

Le fonctionnement de l'aération dans l' habitacle 2 du véhicule 1 par l'intermédiaire des buses d'aération 30a,30bb va maintenant être décrit.

En raison de l'identité entre les deux buses d'aération 30a et 30b et de leurs moyens de commande d'orientation communs 38, 40, 42, seule la buse d'aération 30a sera considérée par la suite. Cependant, il est bien entendu à comprendre que la buse d'aération 30b fonctionne de la même manière que la buse d' aération 30a.

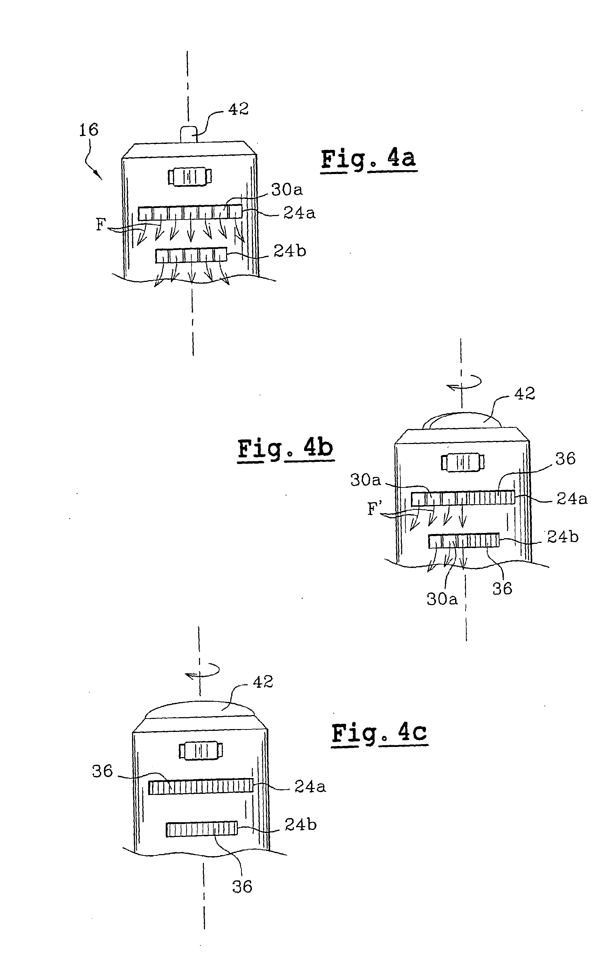

La figure 4a illustre l'ensemble 16 dans une configuration similaire à celle représentée sur la figure 3. En effet, la buse d'aération 30a est orientée de façon à ce que les rebords circonférentiels 36 prévus sur les disques 32a et 32b se situent en contact avec l'entrée d'air 22a du boîtier 20, sans obturer les sorties d'air 24a et 24b de ce même boîtier. Ainsi, comme le montrent les flèches F représentées sur la figure, l' écoulement d' air s'effectue à travers l'intégralité des sorties d'air 24a et 24b, de sorte que l'air diffuse dans toutes les directions à son entrée dans l'habitacle 2 du véhicule 1.

Lorsque l' on désire diffuser de l'air dans un secteur précis de l'habitacle 2, par exemple celui où se trouve le conducteur du véhicule, il est alors nécessaire de faire pivoter la nervure 42, afin d'engendrer le pivotement de l'axe 38 et de la buse d'aération 30a par rapport au boîtier 20 de l' ensemble 16.

Comme on peut l'apercevoir sue la figure 4b, le pivotement de la buse d'aération 30a provoque le déplacement des rebords circonférentiels 36, de sorte que ces derniers viennent respectivement obturer partiellement les sorties d'air 24a et 24b du boîtier 20. Ainsi, comme le montrent les flèches F' sur la figure, seul un secteur restreint des sorties d'air 24a et 24b permet un écoulement d'air dans l'habitacle 2 du véhicule 1, ce secteur limité déterminant la direction de l'écoulement de l'air dans l'habitacle 2. Notons que dans l'exemple représenté sur la figure 4b, l'écoulement d'air provenant des sorties d'air 24a et 24b est exclusivement dirigé en direction de la partie conducteur de l' habitacle 2 du véhicule 1.

Enfin, en faisant encore pivoter davantage la nervure 42 des moyens de commande de l'orientation de la buse d'aération 30a, on provoque la rotation de cette dernière jusqu'à l'obturation totale des sorties d'air 24a,24b à l'aide des rebords circonférentiels 36 prévus sur les disques 32a et 32b (figure 4c). Ceci entraîne par conséquent l' arrêt de l' écoulement de l'air dans l'habitacle 2 du véhicule 1.

Bien entendu, diverses modifications peuvent être apportées par l' homme du métier à l'ensemble 16 pour véhicule automobile 1 qui vient d' être décrit, uniquement à titre d' exemple non-limitatif.

## Revendications

1. Ensemble (16) pour véhicule automobile (1) équipé d'un système de chauffage/climatisation (8), ledit ensemble (16) étant destiné à être installé sur une planche de bord ( 6) dudit véhicule (1) et comprenant un boîtier (20) dans lequel est prévu au moins une buse d'aération (30a, 30b) susceptible de communiquer avec le système de chauffage/climatisation (8) et apte à autoriser un écoulement d'air dans l'habitacle (2) du véhicule (1), l'ensemble (16) comprenant en outre des moyens de commande (38,40,42) de l' orientation de chaque buse d'aération (30a,30b) montés sur ledit boîtier (20), **caractérisé en ce que** l' ensemble (16) comporte également des moyens de commande (44,50,56,62,64) du système de chauffage/climatisation (8) montés sur ledit boîtier (20) de l'ensemble (16).

2. Ensemble (16) selon la revendication 1, **caractérisé en ce que** les moyens de commande (44,50,56,62,64) du système de chauffage/climatisation (8) montés sur ledit boîtier (20) de l'ensemble (16) comprennent :
- une commande (56) de la température de l'air sortant dudit système de chauffage/climatisation (8) ;
- une commande (44) de la vitesse de l'air sortant dudit système de chauffage/climatisation (8) ;
- une commande (50) de la distribution de l'air sortant dudit système de chauffage/climatisation (8) ;
- une commande (62) de recyclage de l'air sortant dudit système de chauffage/climatisation (8) ;
- une commande (64) marche/arrêt du système de chauffage/climatisation (8).

3. Ensemble (16) selon la revendication 2, **caractérisé en ce qu'**au moins une commande appartenant aux moyens de commande (44,50,56,62,64) du système de chauffage/climatisation (8) est une commande électrique précâblée.

4. Ensemble (16) selon l'une quelconque des revendications précédentes, **caractérisé en ce que** chaque buse d' aération (30a,30b) est susceptible de coopérer avec au moins une entrée d'air (22a,22b) et au moins une sortie d'air (24a, 24b, 26a, 26b) pratiquées dans ledit boîtier (20), chaque entrée d'air (22a, 22b) dudit boîtier (20) étant susceptible de coopérer avec au moins un conduit de distribution d'air (12a,12b) du système de chauffage/climatisation (8), et chaque sortie d'air (24a, 24 b, 26a, 26b) dudit boîtier (20) étant susceptible de déboucher dans l'habitable (2) du véhicule (1) .

5. Ensemble (16) selon la revendication 4, **caractérisé en ce que** chaque buse d'aération (30a,30b) comporte des moyens (36) aptes à obturer au moins partiellement chaque sortie d'air (24a,24b,26a,26b) du boîtier (20) lui étant associée.

6. Ensemble (16) selon l' une quelconque des revendications précédentes, **caractérisé en ce que** l' ensemble (16) comprend de plus une commande (70) marche/arrêt des feux de détresse du véhicule (1), la commande (70) étant également montée sur ledit boîtier (20).

7. Ensemble (16) selon l'une quelconque des revendications précédentes, **caractérisé en ce qu'**il comprend un élément de support (18) apte à être monté sur la planche de bord (6) du véhicule (1), et dans lequel ledit boîtier (20) est susceptible d' être assemblé par clipsage.

8. Véhicule automobile (1) équipé d'un système de chauffage/climatisation (8), **caractérisé en ce qu'**il est également équipé d'un ensemble (16) selon l'une quelconque des revendications précédentes, ledit ensemble (16) étant assemblé sur la planche de bord (6) du véhicule (1) , à proximité du bloc de chauffage (10) du système de chauffage/climatisation (8).
